Europäisches Patentamt

(19) European Patent Office

Office européen des brevets

(11) Numéro de publication: **0 008 988**

**B1**

(12) **FASCICULE DE BREVET EUROPÉEN**

(45) Date de publication du fascicule du brevet: **10.04.85**

(21) Numéro de dépôt: **79400624.7**

(22) Date de dépôt: **06.09.79**

(51) Int. Cl.⁴: **A 21 B 3/13,** A 21 C 11/10, A 21 C 11/00

(54) **Plaque de pâtisserie, dispositif de fonçage coopérant avec la plaque et procédé pour la mise en oeuvre de la plaque et du dispositif de fonçage.**

(30) Priorité: **12.09.78 FR 7826111**

(43) Date de publication de la demande: **19.03.80 Bulletin 80/06**

(45) Mention de la délivrance du brevet: **10.04.85 Bulletin 85/15**

(84) Etats contractants désignés: **AT BE CH DE GB IT LU NL SE**

(56) Documents cités:
FR-A-1 102 352
FR-A-1 587 626
FR-A-2 377 940
GB-A- 305 297
US-A-2 526 811

(73) Titulaire: **Fievez, André**
**32, rue de Valenciennes**
**F-59198 Haspres (FR)**

(72) Inventeur: **Fievez, André**
**32, rue de Valenciennes**
**F-59198 Haspres (FR)**

(74) Mandataire: **Derambure, Christian**
**Cabinet BUGNION ASSOCIES SARL 116,**
**boulevard Haussmann**
**F-75008 Paris (FR)**

Courier Press, Leamington Spa, England.

### Description

L'invention concernant une plaque pour pâtisserie, des moyens de fonçage associés et le procédé pour leur mise en oeuvre.

On connaît déjà des dispositifs pour pâtisserie comportant une pluralité de moules constitués d'une virole circulaire en tôle d'acier mince, coupante à son sommet, solidaire à un moule par exemple tronconique et munie d'un emporte pièce mouleur maintenu en pression par un système de verrouillage. Un tel dispositif est décrit dans les brevet français N° 1.587.626. Pendant la cuisson, le produit est maintenu prisonnier entre le moule et l'emporte pièce mouleur. Les moule et l'emporte-pièce sont de faibles épaisseurs, égales, en tôle d'acier qui permettent une répartition égale de transmission calorifique. Ainsi, la pâte est maintenue prisonnière et ne peut avoir une épaisseur qui est susceptible d'augmenter lors de la cuisson.

Dans le brevet anglais N° 305 297, on a décrit un dispositif constitué d'une pluralité de moules et d'une pluralité de moyens de fonçage qui sont utilisés pour venir en correspondance avec les moules.

Mais de tels dispositifs connus ont pour inconvénient principal de ne pas permettre un développement correct de la pâte lors de la cuisson. Or, la cuisson de la pâte est très importante. En effet, elle donne au produit fini son aspect esthétique extérieur et ses propriétés organoleptiques. Une bonne cuisson confère à la pâte cuite sa légèreté, sa forme, son épaisseur, sa régularité superficielle, sa couleur. Or, on souhaite obtenir une épaisseur uniforme et une légèreté de la pâte cuite, donc une perte d'humidité, sans qu'il ne se créé des craquelures superficielles. Les dispositifs connus à ce jour ne permettent pas d'obtenir ces propriétés de façon satisfaisante.

Pour empêcher que la pâte ne se développe en volume de façon excessive et désordonnée, lors de sa cuisson, on utilise de façon connue un morceau de papier sulfurisé placé sur le fond de la pâte et sur lequel on pose des masses telles que petits grains d'aluminium. Cete opération est réalisée manuellement et individuellement pour chaque moule, ce qui est archaïque, long, coûteux et peu satisfaisant car la régularité du fond de pâte cuit dépend de l'importance des masses utilisées et de leur répartition.

Le but de l'invention est de pallier ces inconvénients.

A cet effet, l'invention concerne un ensemble pour pâtisserie comprenant une plaque de pâtisserie comportant une pluralité de moules distribués de manière uniforme, répétée, modulaire, des moyens intégrés pour permettre de découper un flan principal de pâte posé sur la plaque en regard de chaque moule pour constituer des flans de pâte individuels et distincts pour chaque moule, à l'aide de moyens de pressage, lesdits moyens étant constitués par les bords extrêmes libres des rebords des moules formant une arête vive en saillie par rapport à la surface supérieure du support rigide placé entre les moules; des moyens intégrés permettant d'enlever aisément le surplus de pâte découpée entre les flans individuels et en dehors des moules, lesdits moyens étant des rainures entourant les moules, définies par la forme concave de la face supérieure du support; des moyens de fonçage coopérant avec la plaque pendant la cuisson et destinés à être introduits avec la plaque dans un four, lesdits moyens de fonçage assurant à la pâte une transmission de chaleur par conduction. L'ensemble est caractérisé par le fait que la pluralité de moules constitue une structure monobloc en aluminium coulé et que les moyens de fonçage sont constitués par au moins un ensemble monobloc rigide en aluminium coulé, comprenant un support rigide, une pluralité de barrettes fixées au support et une pluralité de matrices fixées à l'extrêmité des barrettes, distribuées de manière uniforme répétée et modulaire, et dont la distribution correspond à la distribution des moules pour que les matrices puissent être logées dans les moules tout en ménageant dans ceux-ci des espaces libres, lesdits moyens de fonçage reposant librement sur les flans de pâte individuels lors de la cuisson et appliquant par leur poids une charge sur les flans, tout en subissant un déplacement vers le haut sous l'effet de l'augmentation de l'épaisseur des flans de pâte pendant la cuisson.

D'autres avantages et caractéristiques de l'invention résulteront de la description qui suivra d'une forme d'éxécution préférentielle mais non limitative en référence aux dessins annexés dans lesquels:

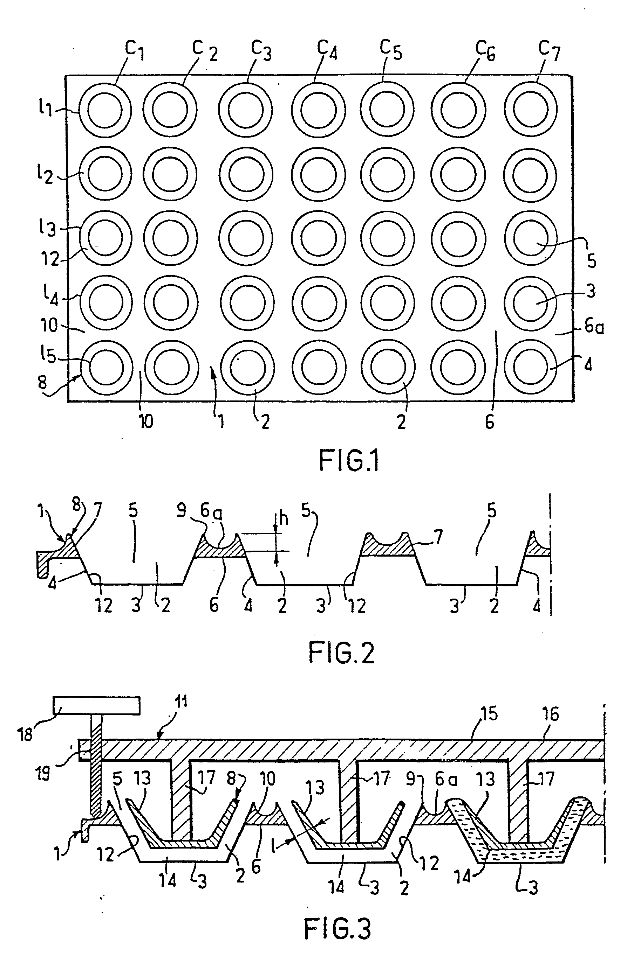

La figure est une vue schématique, en plan d'une plaque de pâtisserie suivant la présente invention; la figure 2 est une vue schématique partielle, en coupe selon la ligne 2—2 de la figure 1 de la plaque à plus grande échelle; la figure 3 est une vue schématique partielle, analogue à la figure 2, de la plaque avec laquelle coopèrent des moyens de fonçage selon l'invention.

Une plaque de pâtisserie 1 suivant l'invention (figures 1 et 2) comporte d'une part une pluralité de moules 2, individuels correspondant à la forme en négatif de l'extérieur des fonds de pâte à réaliser, comportant chacun un fond plat 3 et un rebord 4 s'étendant à partir du fond 3 en étant préférentiellement évasé vers l'ouverture 5 du moule, et, d'autre part, un support rigide 6, reliant rigidement les moules 2 les uns avec les autre par la partie extrême libre supérieure 7, du rebord 4, de manière que les fonds 3 soient coplanaires et les ouvertures 5 dirigées d'un même côté de la plaque.

Sur les figures on a représenté des moules 2 ayant des rebords 4 de contour circulaire, cependant toute autre forme des rebords, notamment cannelés reste dans l'esprit de l'invention.

Les moules 2 sont distribués sur la plaque 1 de façon modulaire et répétée notamment le long de lignes et de colonnes par exemple cinq lignes /1 à /5 et sept colonnes $c1$ à $c7$ comme illustré sur la figure 1. Bien entendu, toute autre distribution des moules 2 ou un nombre de lignes et de colonnes différent restent dans l'esprit de l'invention.

La plaque 1 comporte des moyens 8, intégrés, pour permettre de découper un flan principal de pâte posé sur la plaque 1, en regard de chaque moule 2, en vue de constituer des flans de pâte individuels et distincts placés dans les ouvertures 5, constituées par le bord extême libre supérieur 9, tranchant de chaque rebord 4 saillant par rapport à la face supérieur 6a du support 6 d'une hauteur *h* par exemple de l'ordre de quelques millimètres, notamment de l'ordre de 4 mm, ce qui correspond approximativement à l'épaisseur d'un flan de pâte.

Avec les moyens 8 coopérent des moyens pour presser un flan principal de pâte contre la plaque 1 en direction des moules 2 qui se présentent par exemple sous la forme ou d'une plaque plane ou d'un rouleau connu en soi.

La plaque 1 comporte des moyens 9, intégrés, pour enlever le surplus de pâte entre les flans individuels, constitués notamment par la face supérieure 6a incurvée à concavité tournée dans le même sens que le moule 2 en formant des rainures 10 entourant les bords 9.

La plaque 1 est utilisée comme suit: on réalise d'abord un flan principal de pâte ayant les dimensions générales de la plaquel. On pose ce flan sur la plaque 1 du côté des ouvertures 5. On enfonce, au moins légèrement, le flan dans les moules 2, grâce à des moyens de fonçage décrits ultérieurement. On met en oeuvre les moyens de pressage pour solliciter le flan vers les fonds 3. Lors de cette opération, les bords 9 découpent le flan principal et réalisent des flans individuels, distincts, placés dans chaque moule 2 dans l'ouverture 5. La pâte excédentaire du flan principal entre les flans individuels est concentrée dans les rainures 10.

Avec la plaque 1 sont susceptibles de coopérer des moyens de fonçage 11 dont une première fonction essentielle est de garnir les faces internes 12 des moules 2 avec la pâte des flans individuels pour réaliser des fonds de pâte individuels.

Les moyens de fonçage 11 se présentent sous la forme de matrice 13, chacune susceptible d'être associée à un moule 2. Une matrice 13 a une forme complémentaire de celle de l'intérieur d'un moule 2 tout en étant d'un encombrement plus réduit pour ménager entre la matrice 13 et le moule 2 un espace libre intermédiaire 14 susceptible d'être rempli avec la pâte du fond, ayant par exemple une épaisseur de 5 mm environ et notamment de 6 mm.

Plusieurs matrices 13 sont groupées pour former un ensemble rigide monobloc dans lequel les matrices 13 sont distribuées de façon uniforme, répétée et modulaire correspondant à une distribution des moules 2 sur la plaque 1. Par exemple, l'ensemble 15 forme une barre correspondant à tout ou partie d'une ligne ou d'une colonne de moules 2 ou encore une plaque unique aux dimensions générales de la plaque 1.

L'ensemble 15 comporte en outre un support 16, rigide, monobloc, plan, et une pluralité de barrette 17 parallèles, de même longueur, fixées à leur première extrémité d'un même côté du support 16, notamment perpendiculairement et comportant fixées à leur seconde extrémité les matrices 13.

Les moyens de fonçage sont utilisés comme suit en ce qui concerne leur première fonction: lorsque les flans individuels de pâte sont disposés dans les moules 2, dans leur ouverture 5, on dispose les moyens de fonçage 11, devant la plaque 1 pour que les matrices 13 soient en regard des ouvertures 5. On procède à un déplacement relatif de la plaque 1 et des moyens de fonçage 11 pour faire pénétrer les matrices 13 dans les moules 2 correspondant en direction du fond 3 et provoquer une déformation des flans individuels de pâte qui viennent alors épouser la forme de la face intérieure 12 des moules 2 et constituer des fonds de pâte.

Suivant un perfectionnement possible, on prévoit des moyens assurant une épaisseur contrôlée de l'espace libre 14, qui par exemple sont constitués des cales d'épaisseur déterminée rigidement fixées à la plaque 1 et/ou aux moyens de fonçage 11, venant en blocage sur le moyen de fonçage 11 et/ou la plaque 1 à l'extérieur des moules 2. Ces cales sont en particulier des barrettes fixées au support 6 et/ou support 16 parallèlement aux barrettes 17, venant en blocage sur le support 16 et/ou le support 6. Suivant une autre forme de réalisation (figure 3), ces moyens réglables comprennent au moins une vis pointeau 18, pourvue éventuellement d'un contre-écrou traversant un trou taraudé 19 dans le support 16 notamment à sa partie extrême libre, venant s'appliquer sur le support 6. L'espace libre 14 peut alors avoir son épaisseur réglée en fonction notamment du type de pâte utilisée (feuilletée, sablée, sucrée, brisée, levée), et du type de cuisson et de développement souhaité.

Les moyens de fonçage 11 ont une seconde fonction pour la cuisson des fonds de pâte pendant laquelle ils sont laissés en place. Cela a comme effet d'assurer d'une part une distribution satisfaisante de la chaleur par conduction le long des moyens de fonçage 11 et d'autre part une charge adéquate sur les fonds individuels propre à éviter le développement excessif de la pâte et à assurer sa forme régulière.

A cet effet, une matrice 13 est réalisée en un matériau fortement conducteur de la chaleur et préférentiellement elle a une capacité calorifique suffisante de telle sorte que la cuissont de la pâte s'effectue progressivement et de façon homogène sur toute la surface de celle-ci tant intérieure qu'extérieure ce qui provoque son développement harmonieux et permet d'éliminer toute ou presque substantiellement toute humidité de la pâte ce qui a notamment pour conséquence d'allonger la durée de conservation sans altération des fonds cuits.

La plaque 1 et les moyens de fonçage 11 sont préférentiellement réalisés en un aluminium coulé remarquable par sa résistance élevée et sa haute conductibilité thermique. Les faces internes 12 et la face supérieure 4 du support 6 ainsi que les matrices 13 peuvent être recouvertes d'un matériau antiadhérent.

Dans le cas où l'on souhaite qu'un fond de pâte présente sur son bord libre une dentelure, on découpe un flan de pâte à l'aide d'un emporte-pièce de forme appropriée, cannelée. On place les flans individuels dans les ouvertures 5 et ensuite le procédé est mis en oeuvre comme décrit précédemment.

**Revendications**

1. Ensemble pour pâtisserie comprenant une plaque de pâtisserie comportant une pluralité de moules (2) distribués de manière uniforme, répétée, modulaire, des moyens (9) intégrés, pour permettre de découper un flan principal de pâte posé sur la plaque (1) en regard de chaque moule (2) pour constituer des flans de pâte individuels et distincts pour chaque moule (2), à l'aide de moyens de pressage, lesdits moyens (9) étant constitués par les bords extrêmes libres des rebords (4) des moules (2) formant une arête vive en saillie par rapport à la surface supérieure (6a) du support rigide (6) placé entre les moules (2); des moyens (10) intégrés permettant d'enlever aisément le surplus de pâte découpée entre les flans individuels et en dehors des moules (2), lesdits moyens (10) étant des rainures entourant les moules (2), définies par la forme concave de la face supérieure (6a) du support (6); des moyens de fonçage (11) coopérant avec la plaque pendant la cuisson et destinés à être introduits avec la plaque dans un four, lesdits moyens de fonçage (11) assurant à la pâte une transmission de chaleur par conduction caractérisé par le fait que la pluralité de moules (2) constitue une structure monobloc en aluminium coulé et que les moyens de fonçage (11) sont constitués par au moins un ensemble monobloc rigide (15) en aluminium coulé, comprenant un support rigide (16), une pluralité de barrettes (17) fixées au support (16) et une pluralité de matrices (13) fixées à l'extrêmité des barretes (17), distribuées de manière uniforme répétée et modulaire, et dont la distribution correspond à la distribution des moules (2) pour que les matrices (13) puissent être logées dans les moules (2) toute en ménageant dans ceux-ci des espaces libres (14), lesdits moyens de fonçage (11) reposant librement sur les flans de pâte individuels lors de la cuisson et appliquant par leur poids une charge sur les flans, tout en subissant un déplacement vers le haut sous l'effet de l'augmentation de l'épaisseur des flans de pâte pendant la cuisson.

2. Ensemble selon la revendication 1, caractérisé par le fait qu'il est prévu des moyens de contrôle, éventuellement de réglage de l'épaisseur de l'espace libre (14).

3. Ensemble selon la revendication 2, caractérisé par le fait que les moyens assurant un espace libre (14) d'épaisseur contrôlée et réglable comprennent au moins une vis pointeau (18) traversant des trous taraudés (19) du support (16) venant s'appliquer sur le support (6).

4. Procédé d'emploi d'un ensemble selon les revendications 1 à 3, tel que l'on dispose un flan principal de pâte sur une plaque de pâtisserie (1) du côté des ouvertures (5) des moules (2), on fonce ce flan à l'aide de moyens de fonçage, on met en oeuvre les moyens de pressage de manière que les moyens (8) réalisent des flans de pâte individuels enfoncés dans les ouvertures (5), on enlève grâce aux moyens (9) la pâte excédentaire entre les moules (2); on met en oeuvre les moyens de fonçage (11) en les faisant pénétrer dans les moules (2) pour provoquer la déformation des flans individuels de pâte afin qu'ils viennent garnir les faces internes (12) des moules, caractérisé par le fait qu'on introduit dans le four la plaque (1) et les moyens de fonçage (11) et on maintient en place les moyens de fonçage (11) pendant toute la cuisson des flans de pâte individuels, lesdits moyens de fonçage (11) reposant librement sur les flans et appliquant par leur poids une charge sur les flans de pâte individuels, tout en subissant un déplacement vers le haut sous l'effet de l'augmentation de l'épaisseur des flans de pâte pendant la cuisson.

**Patentansprüche**

1. Einrichtung für Gebäck, mit einer Gebäckplatte, die eine Vielzahl an Formen (2) aufweist, die in einer gleichmäßigen wiederholenden modulförmigen Art verteilt sind, sowie integrierte Mittel (9), um ein Schneiden eines Hauptteigabschnittes, der gegenüberliegenden Form (2) auf der Platte (1) angeordnet ist, zu ermöglichen, um mittels Druckmittel einzelne und getrennte Teigabschnitte für jede Form (2) zu bilden, wobei die Mittel (9) durch die freien äußeren Kanten der Randungen (4) der Formen (2) gebildet werden, die einen scharfen Grat bilden, der im Vergleich zur oberen Fläche (6a) des starren Trägers (6), der zwischen den Formen (2) angeordnet ist, vorspringt; sowie integrierte Mittel (10), die es ermöglichen, mühelos den Überschuß an abgeschnittenem Teig zwischen den einzelnen Abschnitten und außerhalb der Formen (2) zu entnehmen, wobei die Mittel (10) durch die Formen (2) umgebenden Rillen gebildet sind, die durch die konkave Form der oberen Fläche (6a) des Trägers (6) begrenzt sind; sowie ein Pressmittel (11), das mit der Platte während des Ausbackens zusammenwirkt und dazu bestimmt ist, mit der Platte in einen Backofen eingeführt zu werden, und das einen Wärmeübergang durch Leitung auf den Teig sicherstellt, dadurch gekennzeichnet, daß die Vielzahl an Formen (2) einen einstückigen Aufbau aus gegossenem Aluminium bilden und daß das Pressmittel (11) aus zumindest einer starren einstückigen Einrichtung (15) aus gegossenem Aluminium besteht, die einen starren Träger (16), eine Vielzahl an Stangen (17), die am Träger (16) befestigt sind, und eine Vielzahl an Matrizen (13), die am Ende der Stangen (17) befestigt sind, aufweist, wobei diese in einer gleichmäßigen wiederholenden und modulförmigen Art verteilt sind und deren Verteilung der Verteilung der Formen entspricht, damit die Matrizen (13) in den Formen (2) aufgenommen werden können und Freiräume (14) zwischen denselben belassen, wobei das Pressmittel (11) frei auf den einzelnen Teigabschnitten während des Ausbackens ruht und durch sein Gewicht eine Last auf die Abschnitte bringt und ein Verschieben in der Höhe unter der Wirkung der Zunahme der Dicke der Teigabschnitte während des Ausbackens verhindert.

2. Einrichtung nach Anspruch 1, dadurch gekennzeichnet, daß Steuermittel, etwa ggf. zur Einstellung der Höhe des Freiraumes (14) vorgesehen sind.

3. Einrichtung nach Anspruch 2, dadurch gekennzeichnet, daß die Mittel, die einen Freiraum (14) mit gesteuerter und einstellbarer Höhe gewährleisten, zumindest eine Klemmschraube (18) enthalten, die sich durch mit Innengewinde versehene Löcher (19) im Träger (16) hindurcherstreckt und auf dem Träger (6) zur Anlage kommt.

4. Verfahren zum Anwenden einer Einrichtung nach Anspruch 1 bis 3, bei dem ein Teighauptabschnitt auf eine Gebäckplatte (1) auf der Seite der Öffnung (5) der Formen (2) aufgebracht wird, der Abschnitt mit Hilfe von Pressmitteln belegt wird, Druckvorrichtungen derart angewendet werden, daß die Mittel (8) einzelne Teigabschnitte, die in die Öffnungen (5) eingebracht sind, bilden, der überschüssige Teig zwischen den Formen (2) mit Hilfe von Mitteln (9) entnommen wird, das Pressmittel (11) angewendet wird, indem es in die Form (2) eindringt, um die Verformung der einzelnen Teigabschnitte zu bewirken, damit diese die Innenflächen (12) der Formen belegen, dadurch gekennzeichnet, daß die Platte (1) und das Pressmittel (11) in den Ofen eingeführt werden und das Pressmittel (11) während des gesamten Ausbackens der einzelnen Teigböden in dieser Stellung gehalten wird, wobei das Pressmittel (11) frei auf den Abschnitten ruht und durch sein Gewicht eine Last auf die einzelnen Teigabschnitte bringt und ein Verschieben in der Höhe unter der Wirkung der Zunahme der Dicke der Teigabschnitte während des Ausbackens verhindert.

**Claims**

1. An assembly for pastry making comprising a pastry making plate including a plurality of moulds (2) arranged in a uniform, repeated and modular manner, integrated means (9) for cutting out a main flan of paste placed on the plate (1) in front of each mould (2) for constituting individual and distinct flans of paste for each mould (2) by pressing means, said means (9) being constituted by free end edges of flanges (4) of the moulds (2) forming a sharp edge projecting from the upper surface (6a) of the rigid support (6) placed between the moulds (2); integrated means (10) permitting the easy removal of the surplus of paste cut out between the individual flans and outside the moulds (2), defined by the concave shape of the upper face (6a) of the support (6); driving means (11) cooperating with the plate during baking and adapted to be introduced with the plate in an oven, said driving means (11) ensuring a transmission of heat to the paste by conduction, characterized in that the plurality of moulds (2) constitutes a single-piece structure of cast aluminium and the driving means (11) are constituted by at least one rigid single-piece assembly (15) of cast aluminium comprising a rigid support (16), a plurality of bars (17) fixed to the support (16) and a plurality of dies (13) fixed to the end of the bars (17) and arranged in a uniform, repeated and modular manner, this arrangement corresponding to the arrangement of the moulds (2) so that the dies (13) can be disposed in the moulds (2) while defining in the latter free spaces (14), said driving means (11) bearing freely on the individual flans of paste in the course of the baking and applying a load on the flans by their weight while undergoing an upward displacement under the effect of the increase in the thickness of the flans of paste during the baking.

2. An assembly according to Claim 1, characterized in that control means, optionally for regulating the extent of the free space (14), are provided.

3. An assembly according to Claim 2, characterized in that the means ensuring a free space (14) whose extent is controlled and is adjustable comprise at least one screw-threaded rod (18) which extends through tapped apertures (19) in the support (16) and is applied against the support (6).

4. A method for using an assembly according to Claims 1 to 3, such as disposing a main flan of paste on a pastry making plate (1) on the side pertaining to the openings of the moulds (2), driving this flan in by the driving means, employing the pressing means in such manner that the means (8) produce individual flans of paste driven into the openings (5), removing by the means (9) the excess paste between moulds (2); employing the driving means (11) by causing them to penetrate into the moulds (2) and produce the deformation of the individual flans of paste so that they line the internal surfaces (12) of the moulds, characterized in that it comprises introducing into the oven the plate 1 and the driving means (11) and maintaining in position the driving means (11) throughout the baking of the individual flans of paste, said driving means (11) bearing freely on the flans and applying a load on the individual flans of paste by their weight while undergoing an upward displacement under the effect of the increase in the thickness of the flans of paste during the baking.

0 008 988

FIG.1

FIG.2

FIG.3

1